# EUROPÄISCHE PATENTANMELDUNG

(11) **EP 0 914 901 A2**
(43) Veröffentlichungstag der Anmeldung: **12.05.1999**
(21) Anmeldenummer: 98119911.0
(22) Anmeldetag: 21.10.1998
(51) Int. Cl.: B23Q 1/00

(54) **Vorrichtung zum Überführen von Fluiden von einem stehenden in ein drehendes Maschinenteil**

(30) Priorität: 08.11.1997 DE 19749531
(71) Anmelder: Gat Gesellschaft für Antriebstechnik mbH, 65201 Wiesbaden (DE)
(72) Erfinder: Ott, Stephan, 65185 Wiesbaden (DE)

(57) **Zusammenfassung**

Die vorliegende Erfindung betrifft eine Vorrichtung zum Überführen mindestens eines Fluids von einem stehenden (1) in ein um eine Drehachse (10) drehbares Maschinenteil (3), wobei am stehenden (1) und am drehbaren Maschinenteil (3) mindestens die eine von mindestens zwei miteinander in Eingriff bringbaren Dichtflächen (2, 4) angeordnet ist und die Dichtflächen (2, 4) je eine Überführungsöffnung aufweisen, welche ihrerseite mit Zuführ- bzw. Abführleitungen verbunden ist. Um eine Vorrichtung mit den eingangs genannten Merkmalen zu schaffen, welche vor allem in ihrer Konstruktion einfacher aufgebaut und leichter herzustellen ist und welche es dennoch nach Möglichkeit erlauben sollte, ein und derselben Überführungsöffnung am drehenden Maschinenteil unterschiedliche Medien vom stehenden Maschinenteil aus zuzuführen, wird erfindungsgemäß vorgeschlagen, daß die jeweiligen Dichtflächen (2, 4) und Überführungsöffnungen (13, 14) bezüglich der Drehachse (10) exzentrisch angeordnet sind und daß Einrichtungen zum vorzugsweise automatischen Einstellen einer gewünschten Drehposition des drehbaren Maschinenteils (3) vorgesehen sind.

## Beschreibung

Die vorliegende Erfindung betrifft eine Vorrichtung zum Überführen mindestens eines Fluids von einem stehenden in ein um eine Achse drehbares Maschinenteil, wobei sowohl an dem stehenden als auch an dem drehenden Maschinenteil mindestens je eine von mindestens zwei miteinander in Eingriff bringbaren Dichtungsflächen angeordnet ist und wobei in den Dichtflächen je eine Überführungsöffnung vorgesehen ist, die ihrerseits mit Zuführ- und/oder Abführleitungen für das Fluid verbunden ist.

Entsprechende Vorrichtungen sind bereits seit langem bekannt, bei welchen die Fluidzufuhr zentral durch eine innere Bohrung entlang der Achse des drehbaren Maschinenteils erfolgt.

Es ist auch bereits eine Vorrichtung bekannt, bei welcher die Zufuhr über Zuführnuten und -Öffnungen erfolgt, die in konischen Dichtflächen vorgesehen sind, welche nicht im Zentrum der Durchführung, aber rotationssymmetrisch bezüglich der Drehachse angeordnet sind. Werden dabei in unterschiedlichen axialen Positionen Durchführungsöffnungen und -nuten sowie Dichtungen zwischen diesen Nuten vorgesehen, die im Inneren des drehbaren Teils jeweils mit einer eigenen Abführleitung verbunden sind, so können bei diesem System auch zwei oder mehr verschiedene Fluide durch unterschiedliche Leitungen dem drehbaren Maschinenteil zugeführt werden.

Dieses System ist wegen der konischen Dichtflächen und der komplizierten Abdichtung jedoch relativ aufwendig in der Herstellung. Darüberhinaus ist allen bekannten Systemen gemeinsam, daß im Regelfall immer nur ein und dasselbe Fluid durch eine gegebene Durchführung von dem stehenden in das drehbare Maschinenteil überführt werden kann, es sei denn, man wollte beim Wechsel der Fluide jedesmal das Fluid, welches noch in den Zuführleitungen vorhanden ist, entfernen.

Gegenüber diesem Stand der Technik liegt der vorliegenden Erfindung die Aufgabe zugrunde, eine Vorrichtung mit den eingangs genannten Merkmalen zu schaffen, welche vor allem in ihrer Konstruktion einfacher aufgebaut und leichter herzustellen ist und welche es dennoch nach Möglichkeit erlauben sollte, ein und derselben Überführungsöffnung am drehenden Maschinenteil unterschiedliche Medien vom stehenden Maschinenteil aus zuzuführen.

Diese Aufgabe wird dadurch gelöst, daß die Dichtflächen und Überführungsöffnungen bezüglich der Drehachse exzentrisch angeordnet sind und daß Einrichtungen zum vorzugsweise automatischen Einstellen eIner gewünschten Drehposition des drehbaren Maschinenteils vorgesehen sind. Es sind also keine bezüglich der Drehachse rotationssymmetrisch herzustellenden Teile, insbesondere keine bezüglich der Rotationsachse symmetrischen, konischen Dichtflächen herzustellen, deren Fertigung relativ aufwendig ist Stattdessen sind erfindungsgemäß die Dichtflächen mit den zugehörigen Überführungsöffnungen exzentrisch bezüglich der Drehachse, d.h. in einer gegebenen Winkelposition außerhalb der Drehachse angeordnet.

Zwar sind von Dichtungsflächen ausgehende Durchführungsöffnungen bei dem bekannten System mit konischen Dichtflächen auch in einer bestimmten Winkelposition relativ der Drehachse vorgesehen, jedoch sind diese Öffnungen bei dem bekannten System in mindestens einer der Dichtflächen mit umlaufenden Nuten versehen, die eine Zufuhr des Fluids von jeder beliebigen Richtung her ermöglichen.

Dagegen sind im Falle der vorliegenden Erfindung Einrichtungen vorgesehen, die das Einstellen einer bestimmten Drehposition des drehbaren Maschinenteils ermöglichen, wobei diese gewünschte und einzustellende Drehposition selbstverständlich so gewählt wird, daß einander zugeordnete Dichtflächen bzw. Überführungsöffnungen am stehenden und am drehenden Maschinenteil jeweils einander gegenüberstehen. Daraus ergibt sich selbstverständlich auch, daß die Überführung des Fluids nicht während der Drehung des drehenden Maschinenteils, sondern nur während des Stillstandes desselben erfolgt Daraus ergibt sich weiterhin, daß die Dichtflächen während der Drehung des drehbaren Maschinenteils nicht in Kontakt miteinander stehen und aneinander vorbeibewegt werden können. Dagegen können die Dichtflächen in Kontakt miteinander gebracht werden, sobald das drehbare Maschinenteil in der gewünschten Eingriffsposition feststeht.

Zweckmäßigerweise ist in dem stehenden Maschinenteil ein Ventil vorgesehen, welches die Durchführungsöffnung des stehenden Maschinenteils nahe der Dichtfläche verschließt. Damit verhindert man den Austritt größerer Mengen des zu überführenden Fluids, wenn die Dichtflächen nach einer Überführung und vor dem in Betrieb setzen des drehbaren Maschinenteils außer Eingriff miteinander gebracht werden.

Dabei kann es außerdem zweckmäßig sein, wenn auch das drehbare Maschinenteil ein entsprechendes Ventil aufweist, welches die Durchführungsöffnung in der Nähe der zugehörigen Dichtfläche verschließt.

Zweckmäßigerweise sind derartige Ventile als Rückschlagventile ausgebildet, die gegen die Strömungsrichtung des Fluids vorgespannt sind. Um diese Rückschlagventile zu öffnen, muß daher der Fluiddruck die Vorspannkraft der betreffenden Ventilfedern überwinden.

Bevorzugt ist eine Ausführungsform der Erfindung, bei welcher die Durchführungsöffnung und dementsprechend auch die Dichtfläche des drehbaren Maschinenteils an einem mit dem drehbaren Maschinenteil verbundenen Ausleger angeordnet ist. Über einen solchen Ausleger kann ein relativ großer Abstand zur Drehachse hergestellt werden, was eine einfachere Trennung der zentralen Antriebs- und Betätigungsbauteile des drehbaren Maschinenteils von den Zuführeinrichtungen für das Fluid erlaubt.

Dabei ist eine Ausführungsform der Erfindung besonders bevorzugt, bei welcher mehrere Ausleger vorgesehen sind, die vorzugsweise symmetrisch bezüglich der Drehachse angeordnet sind. Symmetrisch zur Drehachse bedeutet hier, in untereinander gleichen Winkelabständen. Zwei Ausleger werden also genau diametral gegenüberliegend angeordnet drei Ausleger unter 120° relativ zueinander versetzt, etc.

Auch entsprechende Überführungseinrichtungen mit Dichtflächen und Durchführungsöffnungen können am stehenden Maschinenteil mehrfach und wiederum vorzugsweise unter gleichen Winkelabständen, d.h. symmetrisch bezüglich der Drehachse, angeordnet sein. Bei gleicher Anzahl von Durchführungen am stehenden und am drehenden Maschinenteil und bei gleicher symmetrischer Anordnung bezüglich der Drehachse können dementsprechend auch mehrere Fluiddurchführungen gleichzeitig betrieben werden, wenn das drehbare Maschinenteil in der gewünschten Drehposition anhält. Dabei können durch die verschiedenen Überführungen sowohl gleiche als auch unterschiedliche Fluide zugeführt werden. Außerdem können auch die Drehpositonen gewechselt werden, so daß durch die jeweiligen Überführungsöffnungen am drehbaren Maschinenteil jeweils unterschiedliche Fluide zugeführt werden.

Es ist zum Beispiel auch möglich, jeweils nur eine oder zwei Durchführungen am drehbaren Maschinenteil, zum Beispiel an Auslegern, vorzusehen, jedoch eine größere Anzahl von Überführungselementen am stehenden Maschinenteil angeordnet ist durch die jeweils unterschiedliche Fluide zugeführt werden. Je nach Drehposition kommen dann unterschiedliche Zuführungselemente mit den Überführungsöffnungen am drehbaren Maschinenteil in Dichtungseingriff, so daß wahlweise unterschiedliche Fluide zugeführt werden können, zum Beispiel an drehenden Maschinen zur spanenden Bearbeitung Flüssigkeiten zum Kühlen und Ausspülen oder auch Druckluft zum Ausblasen von Bohrungen, um diese beispielsweise von Bohrspänen zu befreien, Hydrauliköle oder Druckluft für pneumatische Antriebe, chemische Reagenzien etc..

Zweckmäßigerweise ist bei einem Paar einander gegenüberliegender Dichtflächen in mindestens einer dieser Flächen eine die Überführungsöffnung umgebende Nut für die Aufnahme eines vorzugsweise elastischen Dichtungsringes vorgesehen. Werden dann die gegenüberliegenden Teile miteinander in Eingriff gebracht, so treten die Dichtflächen am stehenden und am drehenden Maschinenteil nicht unmittelbar, sondern nur über den zwischengeschalteten Dichtungsring miteinander in Kontakt.

In der bevorzugten Ausführungsform der Erfindung, die das Überführen unterschiedlicher Fluide durch dieselben oder unterschiedliche Durchführungen am drehenden Maschinenteil ermöglichen soll, sind die Dichtflächen an den gegebenenfalls vorhandenen Auslegern des drehbaren Maschinenteils und die Dichtflächen am stehenden Maschinenteil untereinander jeweils identisch ausgebildet, so daß jede Dichtfläche am drehenden Maschinenteil mit jeder Dichtfläche am stehenden Maschinenteil in Dichtungseingriff gebracht werden kann, wobei die entsprechenden Überführungsöffnungen im wesentlichen miteinander fluchten.

Damit die Dichtflächen nicht versehentlich während der Drehung des drehbaren Maschinenteils miteinander in Berührung kommen, was zu Beschädigungen führen könnte, sind die Dichtflächen am stehenden Maschinenteil außer Eingriff mit den gegenüberliegenden Dichtflächen des drehbaren Maschinenteiles vorgespannt. Bei der Ausführungsform mit mindestens einem vorgespannten Rückschlagventil an der Austtrittsöffnung des stehenden Maschinenteils ist dabei außerdem vorgesehen, daß die Federkaft der Vorspannfeder des Rückschlagventils am stehenden Maschinenteil größer ist als die Federkraft, mit welcher die Dichtungsfläche des stehenden Maschinenteils außer Eingriff vorgespannt ist. Bei der Beaufschlagung der entsprechenden Überführung von einer Zuführleitung her mit Druck wird zunächst die Vorspannkraft der Feder überwunden, die die Dichtfläche außer Eingriff vorspannt, so daß zunächst der Eingriff zwischen den Dichtflächen (gegebenenfalls mit dem dazwischenliegenden Dichtring) sichergestellt wird und erst anschließend wird durch den entsprechend höheren Druck die Kraft der Feder des Rückschlagventils überwunden, so daß dieses öffnet und das Fluid durch die Überführungsöffnungen hindurchströmen läßt, die entlang der Dichtflächen nach außen abgedichtet sind.

Hinsichtlich der Herstellung sind vor allem solche Vorrichtungen gemäß der vorliegenden Erfindung bevorzugt, bei welchen die Dichtflächen entweder in Ebenen senkrecht zur Drehachse oder aber in Tangentialebenen bezüglich der Drehachse angeordnet sind. Dabei sind im Falle der erstgenannten Ausführungsform und bei mehreren Überführungsöffnungen selbstverständlich alle Dichtflächen am drehenden Maschinenteil vorzugsweise in genau derselben Ebene senkrecht zur Drehachse angeordnet und das gleiche gilt auch für alle Dichtflächen am stehenden Maschinenteil, wobei die letztgenannte Ebene von Dichtflächen lediglich um einen kleinen Schaltabstand in axialer Richtung von der Ebene der Dichtflächen des drehbaren Maschinenteils verschoben ist. Im Falle der Anordnung der Dichtflächen in Tangentialebenen werden entsprechende zylindrische Flächen am drehenden Maschinenteil mit entsprechenden ebenen Facetten versehen, um den Eingriff mit ebenen Dichtflächen zu ermöglichen, die während der Drehung des drehbaren Maschinenteils radial außerhalb des Drehradius des betreffenden drehenden Maschinenteils angeordnet sind und bei Stillstand des drehenden Maschinenteil radial auf die jeweiligen gegenüberliegenden Dichtflächen zubewegt werden können, um mit diesen in Dichteingriff zu treten.

Weitere Vorteile, Merkmale und Anwendungsmöglichkeiten werden deutlich anhand der folgenden Beschreibung einer bevorzugten Ausführungsform und der dazugehörigen Figuren. Es zeigen:
- Figur 1: den drehbaren Teil der erfindungsgemäßen Überführungseinrichtung in der Draufsicht,
- Figur 2: einen Längsschnitt durch ein am feststehenden Maschinenteil angeordnetes Durchführungsgehäuse mit einem gegenüberliegenden Anschluß des drehbaren Maschinenteils und
- Figur 3: eine Teilvergrößerung der Figur 2.

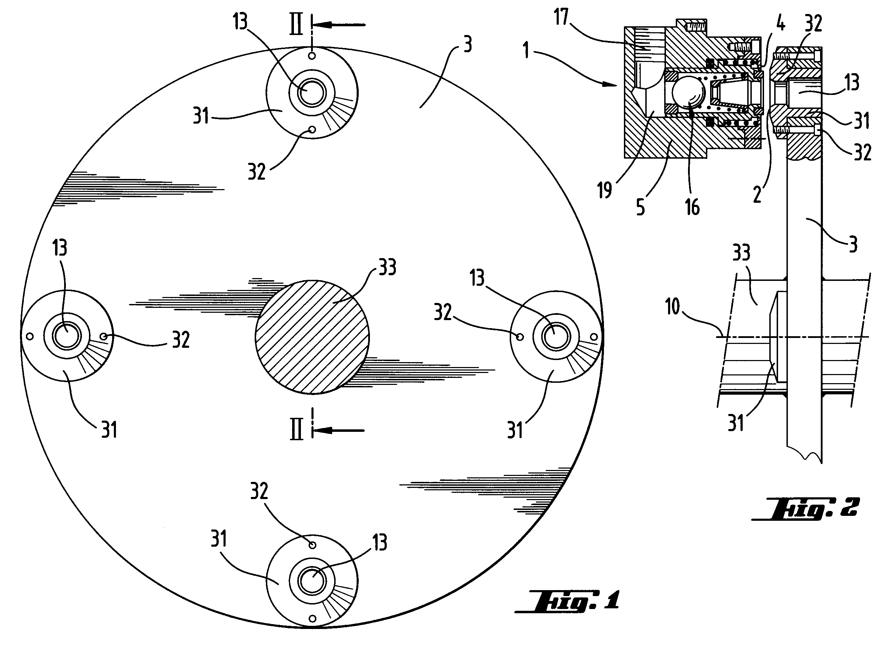

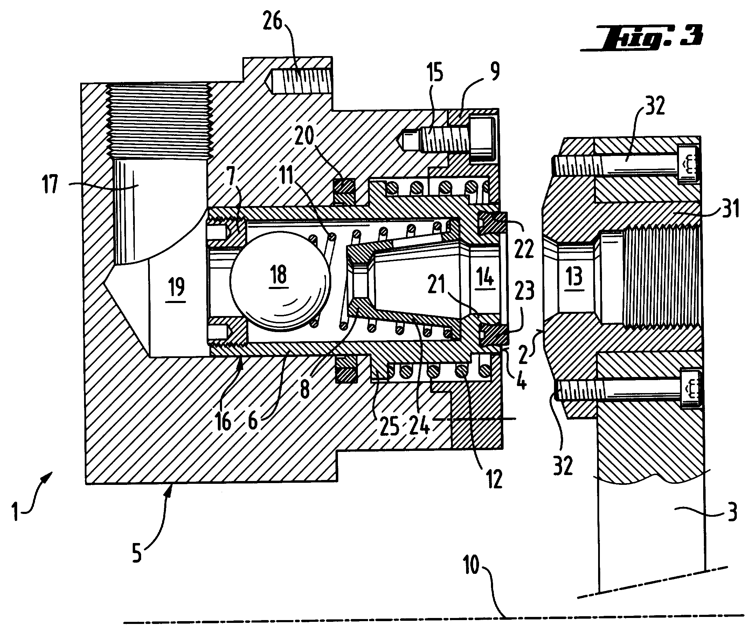

In der Figur 1 erkennt man in der Draufsicht eine Durchführungsscheibe 3 (drehbares Maschinenteil) mit Anschlußstücken 31. Die Anschlußstücke 31 sind im wesentlichen zylindrische Teile, die in Bohrungen der Durchführungsscheibe 3 aufgenommen sind und die ihrerseits eine zentrale Durchgangsbohrung 13 sowie an einem Ende einen Flansch aufweisen, der zur Befestigung der Anschlußstücke 31 an der Scheibe 3 mit Hilfe von Schrauben 32 dient (siehe Figur 3).

Die Scheibe 3 ist an einer Welle 33 angeschweißt und mit dieser Welle 33 um eine zentrale Drehachse 10 drehbar. Insgesamt sind an der Scheibe vier Anschlußstücke 31 jeweils um 90° versetzt und in der Nähe des Umfanges der Scheibe angeordnet. Es versteht sich, daß die Anschlußstücke 31 ebenso gut auch an zwei kreuzweise angeordneten Schenkeln angebracht sein könnten. Figur 2 zeigt ein dem stehenden Maschinenteil 1 zugeordnetes Durchführungsgehäuse 5 als Kernstück der Überführungseinheit im Schnitt, welches mit einem der Anschlußstücke 31 der Scheibe 3 ausgerichtet ist. Zum Überführen von Fluid muß jeweils eines der Anschlußstücke 31 mit dem fest montierten Durchführungsgehäuse 5 ausgerichtet und mit dessen axialer Bohrung 19 in Flucht gebracht werden, damit Fluid überführt werden kann. Hierzu sind in den Figuren nicht dargestellte Einrichtungen vorgesehen, weiche für die Übergabe von Fluid beim Stillstand der Scheibe 3 dafür sorgen, daß die Scheibe 3 bzw. die Welle 33 eine fest vorgegebene Winkelposition bezüglich einer Drehung um die Drehachse 10 einnimmt, so daß entweder ein bestimmtes der vier Anschlußstücke 31 oder aber irgendein beliebiges der Anschlußstücke 31 mit dem Durchführungsgehäuse 5 passend ausgerichtet wird. Ob ein bestimmtes oder aber ein beliebiges Anschlußstück 31 mit dem Durchführungsgehäuse 5 ausgerichtet wird, hängt davon ab, ob zum Beispiel alle vier Anschlußstücke 31 ein und denselben Verbraucher versorgen oder ob jedem oder einer Teilgruppe der Anschlußstücke 31 eine bestimmte Verbrauchsstelle zugeordnet ist, so daß an diese Verbrauchsstelle Fluid gezielt nur über ein bestimmtes Anschlußstück 31 oder eine bestimmte Teilgruppe der Anschlußstücke 31 zugeführt werden kann. In letzterem Fall ist es zum Beispiel notwendig, daß nach der Überführung von Fluid durch eines der Anschlußstücke 31 die Scheibe 3 jeweils um 90° oder einen anderen passenden Winkel weitergedreht wird, wenn auch über die übrigen Anschlußstücke 31 Fluid zu den zugehörigen Verbrauchsstellen geführt werden soll.

Auf der Rückseite der Anschlußstücke 31 schließt ein Schlauch oder Rohr an, die hier nicht dargestellt sind. Alternativ könnte die Scheibe 3 auch radiale Bohrungen aufweisen, die seitwärts durch die zylindrische Wand der Anschlußstücke 31 in die Bohrung 13 münden, während die hintere Öffnung der Bohrung 13 dementsprechend verschlossen sein müßte.

Figur 3 ist im wesentlichen eine Vergrößerung des in Figur 2 erkennbaren Durchführungsgehäuses 5 mit dem darin angeordneten Rückschlagventil 16.

Das Durchführungsgehäuse 5 hat eine radiale Bohrung 17 und eine axiale Bohrung 19, wobei allerdings festzuhalten ist, daß die axiale Bohrung 19 im allgemeinen nicht entlang der Drehachse 10 des drehbaren Maschinenteils (Durchführungsscheibe) 3, sondern lediglich parallel zu dieser Drehachse verläuft, die zur Verdeutlichung dieses Sachverhaltes gestrichelt unten in Figur 3 angedeutet ist. In der axialen Bohrung 19 ist ein Rückschlagventil 16 angeordnet mit einer Ventilkugel 18, die einen hohlzylindrischen Ventilsitz 7 verschließt. Dieser hohlzylindrische Ventilsitz 7 ist als hohlzylindrische Schraube augebildet, die in ein passendes Gewinde am Ende eines Ventilkolbens 6 abgedichtet eingeschraubt ist. An seinem gegenüberliegenden Ende weist der Ventilkolben 6 einen umlaufenden Bund 21 auf, an welchem sich eine in etwa schraubenförmige Druckfeder 11 mit einem Ende abstützt, die am anderen Ende an der Ventilkugel 18 angreift und diese gegen den Ventilsitz 7 drückt.

Im Abstand zur Ventilkugel 18 auf der gegenüberliegenden Seite des Ventilsitzes erkennt man noch einen Ventilanschlag 8, der sich seinerseits über Stege 24 ebenfalls am Bund 21 abstützt und der bei starkem Strömungsdruck des durch das geöffnete Rückschlagventil 16 durchströmenden Fluids die Ventilkugel 18 in einer Position abstützt, in welcher sie die zentrale Öffnung des hohlzylindrischen Ventilsitzes 7 weitgehend freigegeben hat, wobei verhindert wird, daß die Ventilkugel 18 noch weiter in Richtung der Durchführungsöffnung 14 bewegt wird und diese bei noch weiter zunehmendem Fluiddruck möglicherweise verschließt. Das Fluid kann so durch die zentrale Öffnung des hohlzylindrischen Ventilsitzes 7 hindurch, außen um die Ventilkugel 18 herum und zwischen den Siegen 24 des Ventilanschlages 8 hindurch durch die Durchführungsöffnung 14 hinausströmen, die durch den umlaufenden, nach innen vorspringenden Bund 21 des Ventilkolbens 6 definiert wird. Die dem hohlzylindrischen Ventilsitz 7 abgewandte Stirnseite des Ventilkolbens 6 definiert die Dichtungsfläche 4, die wiederum eine umlaufende Nut 22 aufweist, in der ein elastischer Dichtungsring 23 aufgenommen ist. Dichtungsring 23 und Nut 22 sind so bemessen, daß der Dichtungsring 23 in axialer Richtung über die Ebene der Stirnfläche des Ventilkolbens 6 hervorsteht und so mit der gegenüberliegenden Dichtungsfläche 2 an einem drehbaren Maschinenteil (Durchführungsscheibe) 3 in Eingriff treten kann.

Der Ventilkolben 6 ist seinerseits axial beweglich in der axialen Bohrung 19 geführt und wird durch eine Feder 12 in einer Richtung außer Eingriff mit der Dichtfläche 2 des drehbaren Maschinenteiles (Durchführungsscheibe) 3 vorgespannt gehalten. Zu diesem Zweck weist das Durchführungsgehäuse 5 eine ringförmige Halteplatte 9 auf, die die axiale Bohrung 19 ringförmig umgibt und mit Hilfe von Schrauben 15 nach dem Einsetzen des Ventilkolbens 6 am Durchführungsgehäuse 5 befestigt wird. Auch die Ringplatte 9 weist einen nach innen ragenden Bund auf, auf welchen sich die Vorspannfeder 12 mit einem Ende abstützt, während das andere Ende der Vorspannfeder 12 an einem an dar Außenwand des Ventilkolbens 6 angesetzten äußeren Bund 25 angreift. Die axiale Bohrung 19 ist als Stufenbohrung ausgebildet, wobei die Stufe dieser Bohrung einen Anschlag für den äußeren Bund 25 des Ventilkolbens 6 bildet, der so die eine Endposition des Ventilkolbens 6 definiert, in welcher die Dichtflächen 2, 4 außer Eingriff sind. In dem verjüngten Teil der axialen Bohrung 19 ist noch eine ringförmige Nut vorgesehen, weiche eine Gleitdichtung 20 aufnimmt, die mit der Außenseite des Ventilkolbens 6 in Eingriff steht, so daß der Ventilkolben 6 axial beweglich aber abgedichtet in der axialen Stufenbohrung 19 geführt ist. Eine weitere Stufe an der Außenseite des Ventilkolbens 6 nahe dem Ende, welches die Dichtfläche 4 aufweist, dient als Begrenzungsanschlag, der eine Überlastung der Vorspannfeder 12 verhindert. Ansonsten wird im Normalbetrieb die Bewegung des Ventilkolbens 6 durch den Eingriff der Dichtflächen 2, 4 bzw. dieser Flächen mit dem zwischengeschalteten Dichtungsring 23 begrenzt, wobei auf die Innenflächen der umlaufenden Nut in der Dichtfläche 4 als Teil dieser Dichtfläche 4 angesehen werden.

Das Fluid wird durch die radiale Bohrung 17 zugeführt und beaufschlagt zunächst die in Figur 3 linke Stirnseite des Ventilkolbens 6 mit dem hohlzylindrischen Ventilsitz 7 und die Fläche der Ventilkugel 18 innerhalb des hohlzylindrischen Ventilsitzes 7. Bei niedrigem Druck reicht die auf die Ventilkugel 18 wirkende Druckkraft nicht aus, die Druckfeder 11 zusammenzudrücken, sondern diese Kraft wird lediglich über die Druckfeder 11 auf den nach innen ragenden Bund 21 des Ventilkolbens 6 und damit auch auf die Vorspannfeder 12 übertragen. Zusätzlich wirkt auf die Vorspannfeder 12 auch noch der Druck, der auf den hohlzylindrischen Ventilsitz 7 und die Stirnfläche des Ventilkolbens 6 ausgeübt wird. Ab einem bestimmten Druck, der noch nicht ausreicht, um die Kraft der Druckfeder 11 zu überwinden, wird daher der gesamte Ventilkolben 6 gegen die Kraft der Vorspannfeder 12 in Figur 2 nach rechts bewegt, bis der elastische Dichtungsring 23 mit der Dichtfläche 2 des drehbaren Maschinenteiles (Durchführungsscheibe) 3 in Eingriff tritt. Wegen der unterschiedlichen Flächen, auf weiche die von der Druckfeder 11 aufzufangende Druckkraft im Vergleich zu der von der Vorspannfeder 12 aufzufangenden Druckkraft wirkt, muß die Federkonstante der Druckfeder 11 nicht notwendigerweise größer sein als die der Vorspannfeder 12, um die gewünschte Schaltreihenfolge sicherzustellen, nämlich zuerst in Eingriff bringen des Dichtungsringes 23 mit der gegenüberliegenden Dichtfläche 2 durch Verschieben des Ventilkolbens 6 und das anschließende Öffnen des Rückschlagventils 16 durch Verschieben der Ventilkugel 18 gegen die Kraft der Druckfeder 11, nachdem der Dichtungseingriff sichergestellt und der Druck entsprechend angestiegen ist.

Das Durchführungsgehäuse 5 ist mit Hilfe von nicht dargestellten Schrauben, die in Gewindebohrungen 26 eingreifen, die am äußeren Umfang des Durchführungsgehäuses 5 angeordnet sind, an einem ebenfalls nicht dargestellten, stehenden Maschinenteil befestigt. Es versteht sich, daß diese Befestigung möglichst starr sein sollte, damit die Dichtflächen 2, 4 bzw. der Dichtungsring 23 mit der Dichtfläche 2 in einen gleichmäßig dichten Eingriff gebracht werden können.

Es versteht sich, daß das Durchführungsgehäuse 5 und die Anschlußstücke 31 in der Papierebene und relativ zu der Drehachse 10 um 90° verdreht werden können, so daß die zuvor achsparallelen Bohrungen 19 und 13 sich in radialer Richtung erstrecken würden, während es auf die Ausrichtung der zuvor radialen Bohrung 17 letzlich nicht ankommt. Der dargestellte Abschnitt des drehbaren Maschinenteiles (Durchführungsscheibe) 3 könnte dann zum Beispiel ein sich radial erstreckender Stutzen mit einem Anschlußstück 31 an seinem freien Ende sein.

## Patentansprüche

1. Vorrichtung zum Überführen mindestens eines Fluids von einem stehenden (1) in ein um eine Drehachse (10) drehbares Maschinenteil (3), wobei am stehenden (1) und am drehbaren Maschinenteil (3) mindestens die eine von mindestens zwei miteinander in Eingriff bringbaren Dichtflächen (2, 4) angeordnet ist und die Dichtflächen (2, 4) je eine Überführungsöffnung aufweisen, weiche ihrerseite mit Zuführ- bzw. Abführleitungen verbunden ist, **dadurch gekennzeichnet**, daß die jeweiligen Dichtflächen (2, 4) und Überführungsöffnungen (13, 14) bezüglich der Drehachse (10) exzentrisch angeordnet sind und daß Einrichtungen zum vorzugsweise automatischen Einstellen einer gewünschten Drehposition des drehbaren Maschinenteils (3) vorgesehen sind.

2. Vorrichtung nach Anspruch 1, dadurch gekennzeichnet, daß an dem stehenden Maschinenteil (1) ein Ventil (16) vorgesehen ist, weiches die Durchführungsöffnung (14) nahe der Dichtungsfläche (4) verschließt.

3. Vorrichtung nach Anspruch 1 oder 2, dadurch gekennzeichnet, daß am drehbaren Maschinenteil (3) ein Ventil vorgesehen ist, welches die Öffnung (13) nahe der Dichtfläche (2) verschließt.

4. Vorrichtung nach Anspruch 2 oder 3, dadurch gekennzeichnet, daß das Ventil (16) ein gegen die Strömungsrichtung des Fluids vorgespanntes Rückschlagventil ist.

5. Vorrichtung nach einem der Ansprüche 1 bis 4, dadurch gekennzeichnet, daß die Durchführungsöffnung (13) des drehbaren Maschinenteils (3) an einem Ausleger des drehbaren Maschinenteils (3) vorgesehen ist.

6. Vorrichtung nach Anspruch 5, dadurch gekennzeichnet, daß mehrere Ausleger mit Durchführungsöffnungen (13) symmetrisch bezüglich der Drehachse (10) vorgesehen sind.

7. Vorrichtung nach einem der Ansprüche 1 bis 6, dadurch gekennzeichnet, daß am stehenden Maschinenteil (1) mehrere Überführungsöffnungen (14), vorzugsweise in bezüglich der Drehachse (10) symmetrischen Positionen, angeordnet sind.

8. Vorrichtung nach einem der Ansprüche 6 oder 7, dadurch gekennzeichnet, daß die mehreren Dichtflächen am stehenden Maschinenteil (1) und/oder am drehbaren Maschinenteil (3) untereinander jeweils identisch ausgebildet sind.

9. Vorrichtung nach einem der Ansprüche 1 bis 8, dadurch gekennzeichnet, daß jeweils in mindestens einer der jeweils einander gegenüberliegenden Dichtflächen (2, 4) eine die Durchführungsöffnung (13, 14) umgebende Nut für die Aufnahme eines elastischen Dichtungsringes (23) vorgesehen ist.

10. Vorrichtung nach einem der Ansprüche 1 bis 9, dadurch gekennzeichnet, daß am stehenden Maschinenteil (1) mindestens ein Durchführungsgehäuse (5) vorgesehen ist, an welchem eine Dichtungsfläche (4) in Richtung auf die jeweils gegenüberliegende Dichtungsfläche (2) beweglich und außer Eingriff vorgespannt angeordnet ist.

11. Vorrichtung nach Anspruch 10, dadurch gekennzeichnet, daß die Federkraft eines in Schließrichtung vorgespannten Ventils am stehenden Maschinenteil (1) größer ist als die Vorspannkraft der Dichtfläche (4), welche außer Eingriff mit der gegenüberliegenden Dichtfläche (2) am Durchführungsgehäuse (5) vorgespannt ist.

12. Vorrichtung nach einem der Ansprüche 1 bis 11, dadurch gekennzeichnet, daß die Dichtflächen in Ebenen angeordnet sind, weiche senkrecht zur Drehachse (10) des drehenden Maschinenteils (3) verlaufen.

13. Vorrichtung nach einem der Ansprüche 1 bis 11, dadurch gekennzeichnet, daß die Dichtflächen (2, 4) in Tangentialebenen bezüglich der Drehachse (10) angeordnet sind.
